# EUROPEAN PATENT APPLICATION

(11) **EP 3 993 512 A1**
(43) Date of publication of application: **04.05.2022**
(21) Application number: 20205319.5
(22) Date of filing: 03.11.2020
(51) Int. Cl.: H04W 52/02, H04W 88/06, H04W 84/18, H04L 27/02

(54) **ULTRA-LOW POWER COMMUNICATION SYSTEM AND METHOD**

(71) Applicant: ETH Zurich, 8092 Zurich (CH)
(72) Inventor: MAGNO, Michele, 8004 Zürich (CH); POLONELLI, Tommaso, 40138 Bologna (IT); BURGER, Thomas, 5452 Oberrohrdorf (CH); NICULESCU, Vlad, 8049 Zürich (CH)

(57) **Abstract**

According to the present invention there is provided a wireless communication system (10) comprising: a first transceiver (11) configured to send and to receive wireless signals (14,15); a second transceiver (13) configured to exchange the signals (15) with the first transceiver (11); a wake-up receiver (12) configured to receive the signals (14) from the first transceiver(11) and to communicate with the second transceiver (13),
characterized in that the wake-up receiver (12) is configured to wake up the second transceiver (13) based on content of the signal (14) sent by the first transceiver (11). The corresponding method for operating a wireless communication system (10) is also provided.

## Description

### Field of the invention

The present invention concerns system and method for ultra-low power wireless communication. In particular, it concerns an ultra-low power communication system comprising a wake-up receiver for ultra-wide band communication.

### Description of related art

Low power and battery supplied sensor nodes are nowadays commonly used in industrial, consumer such as mobile and wearable, and agriculture applications. Usually, they are able to send and receive information wirelessly, but it is well known that the radio communication is the most power-hungry task decreasing the battery and thereby system lifetime. Communication power consumption is wasted also when no information is transmitted and the radio is in listening mode waiting to receive. The most common approach is duty cycled listening, where the receiver periodically scans looking for incoming packets. However, this approach continues to consume power and increases the latency of communication, and, in the worst case can lead to packet loss. This problem is particularly severe with ultra-wide band (UWB) technology, where the receiver needs hundreds of milliwatts of power and the duty cycling cannot be too aggressive since the UWB technology is specifically designed for moving objects. In this scenario, an asynchronous approach with significant energy saving can be applied, where a low power receiver continuously listens for a packet preamble, waking up the fully functional receiver only on triggering events. To be effective the wakeup function needs to consume much less than the listening consumption.

UWB is a radio technology that enables secure ranging and precision sensing both for indoor and outdoor applications, also supporting high speed data transfer, which can be exploited to download data and measurements from remote devices. UWB technology may be successfully integrated in smartphones and IoT devices and other battery-operated mobile device to achieve indoor localization with centimeter precision. One of the most important deficiencies of UWB is the power consumption at the receiver side especially waiting for a message, which is not compatible with battery supplied devices, such as smartphones, wireless sensors, wearable devices, and unmanned aerial vehicles (UAVs). UWB communication systems have still a power consumption that will not allow to run in battery-operated devices for long period.

It is an aim of the present invention to obviate or mitigate at least some of the disadvantages associated with the prior art.

### Brief summary of the invention

According to the invention, these aims are achieved by means of a wireless communication system comprising: a first transceiver configured to send and to receive wireless signals; a second transceiver configured to exchange the signals with the first transceiver; a wake-up receiver configured to receive the signals from the first transceiver and to communicate with the second transceiver, characterized in that the wake-up receiver is configured to wake up the second transceiver based on content of the signal sent by the first transceiver.

According to a further aspect of the present invention there is provided a method for operating a wireless communication system.

### Brief Description of the Drawings

The invention will be better understood with the aid of the description of an embodiment given by way of example and illustrated by the figures, in which:
Fig. 1 illustrates a wireless communication system according to an exemplary embodiment of the present invention;
Fig.2 illustrates a wireless communication system according to another exemplary embodiment of the present invention;
Fig.3 illustrates a packet structure used according to an exemplary embodiment of the present invention;
Fig.4 illustrates OOK modulation scheme used according to an exemplary embodiment of the present invention;
Fig.5 illustrates a block diagram of wake-up receiver according to an exemplary embodiment of the present invention;
Fig.6 illustrate a block diagram of wake-up receiver according to another exemplary embodiment of the present invention;
Fig.7 illustrates a flow chart for the method of wireless communication according to an exemplary embodiment of the present invention.

### Detailed Description

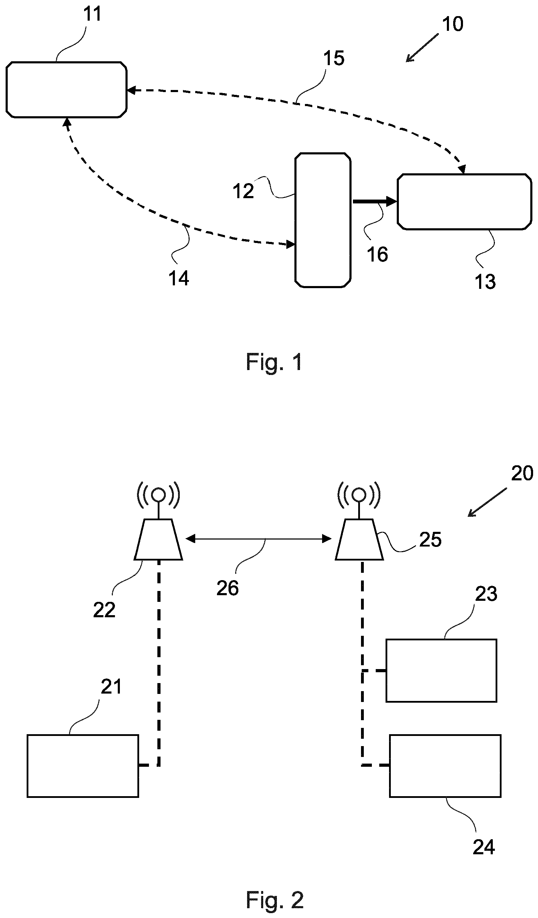

Figure 1 shows a schematic view of a wireless communication system 10 according to the invention. The system 10 comprises a first transceiver 11 configured to send and receive signals 15. In the preferred embodiment, the transceiver is configured to work in UWB range, for example supporting 802.15.4-2011 UWB standard protocol at 3.996 GHz and 500MHz bandwidth. However, the mentioned frequencies are not limiting, and the embodiment of the invention may work in the other frequency ranges as well. The system 10 comprises a second transceiver 13 configured to exchange signals 15 with the first transceiver 11, and to produce bi-directional data transfer. Such data transfer may be used, for example, for a distance measurement between the transceivers 11 and 13 or in general high data rate message exchange.

The system 10 comprises also an ultra-low power wake-up receiver (WUR) 12, which is configured to receive the wake up signals 14 from the first transceiver 11, which changes its configuration between wake-up signals for the WUR and communication signals for the transceiver 13. WUR 12 is configured to communicate with the second transceiver 13 via signals 16. In one preferred embodiment, WUR 12 and the second transceiver 13 are integral parts of one device.

Figure 2 shows another embodiment of the present invention. A wireless communication system 20 comprises a first sensor node 21 connected to the first antenna 22. The first sensor node 21 is configured to send and receive signals 26. The system 20 comprises the second sensor node 23 configured to send and receive the signals 26. The system 20 comprises wake-up receiver 24 configured to send wake-up signal (WUS) to the second sensor node 23. In this embodiment, the sensor node 23 and the WUR 24 share a common antenna 25.

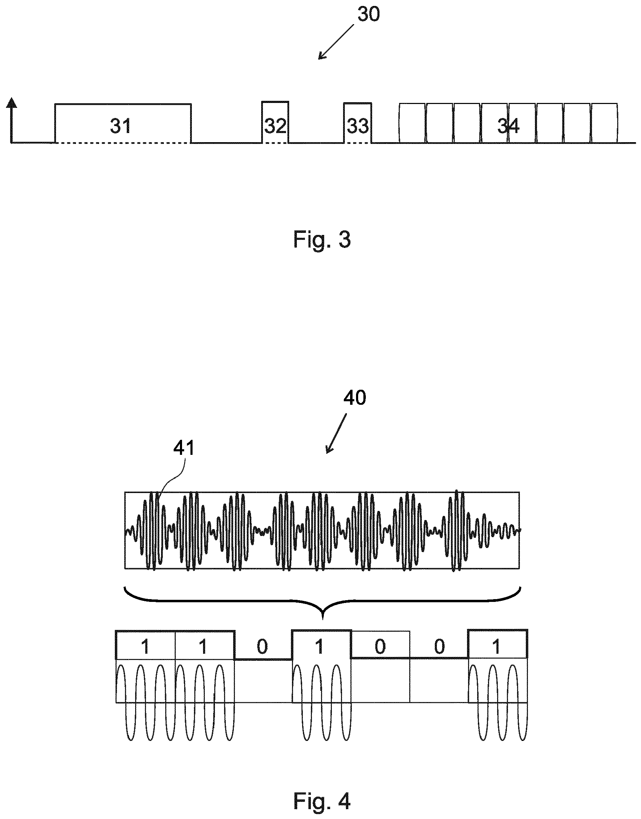

In one embodiment, the structure of the message 14 sent from the first receiver 11 to the WUR 12 may have a structure shown in Figure 3. A message packet 30 may have a preamble 31, a sync packet 32, a start bit 33 and data 34. In one preferred embodiment, the message 14 is modulated using on-off keying (OOK) modulation. For example, in one embodiment the message 14 may be modulated at 1kHz, which is a modulation frequency much lower comparing to standard UWB modulation at 16MHz or 64MHz. In this embodiment, the standard 802.15.4-2011 UWB protocol may be used to build up a custom OOK modulation at 1kHz. To send the bit "1" the transmitter 11 has to send the radio signal for 1 ms, while the "0" symbol is generated keeping off the communication for 1 ms, as shown in Figure 4 where the sequence of bits 40 comprises UWB pulses 41 representing bit "1".

The operation principle of the system 10 may be describes as follows. The first transceiver 11 sends wake-up message 14 to the WUR 12, which is verifying the content (i.e. an identification address for WUR 12) of the wake-up message 14. If the message 14 is intended to wake up the second transceiver 13 then the WUR 12 sends the signal 16 to the transceiver 13 to wake up. When the transceiver 13 is enabled, high speed data transfer between the transceivers 11 and 13 is enabled and for example distance measurement can be performed following pre-existing IEEE 802.15.4 standard. At the end of operations, the transceiver 13 returns to deep sleep mode, saving energy and extending the battery lifetime.

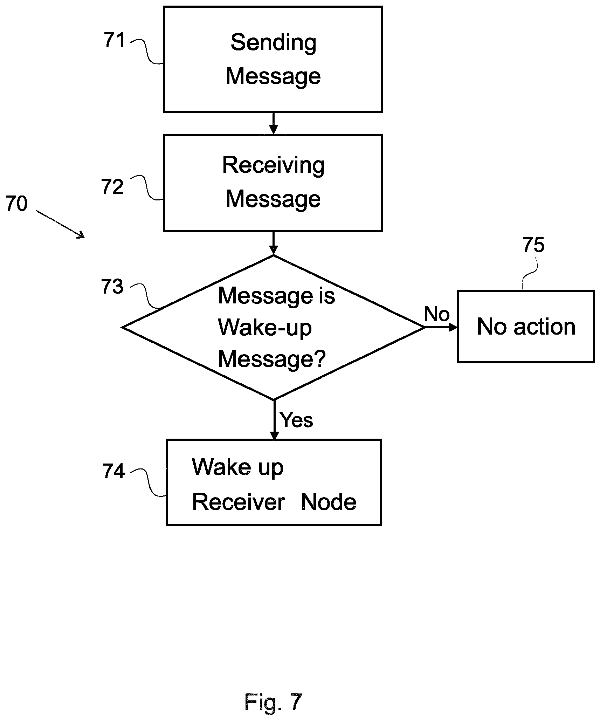

Figure 7 shows block diagram 70 of one embodiment of the method of the present invention. In the first step 71 a message is sent from the first transceiver 11 to the WUR 12. The WUR 12 receives the message in the second step 72. In the third step 73, the WUR 12 verifies if the received message is the wake-up message. In the case of matching, the transceiver 13 is enabled (step 74), and if there is no matching there is no action from the WUR 12 (step 75).

The implementation of WUR 12 can have different structures such as the assembly of the discrete components soldered on PCB, or it can have the form of an integrated circuit (IC). The aim of a design is to optimize performance in terms of sensitivity (longer range) and power demand (lower power). The power demand of the WUR 12 is usually in microwatts or nanowatts. For example, the WUR presented may support continuous listening using just 2 microwatts, which can support a theoretical operation up to 15 years with a 100 mAh battery. Using system 10, at -45 dBm sensitivity, power demand in listening mode is of just 1.2 microwatts peaking at 56 microwatts for a target sensitivity of -84 dBm using integrated circuits. With this sensitivity is possible to achieve 10-20 meters range with always-on capabilities of the receiver and low power consumption.

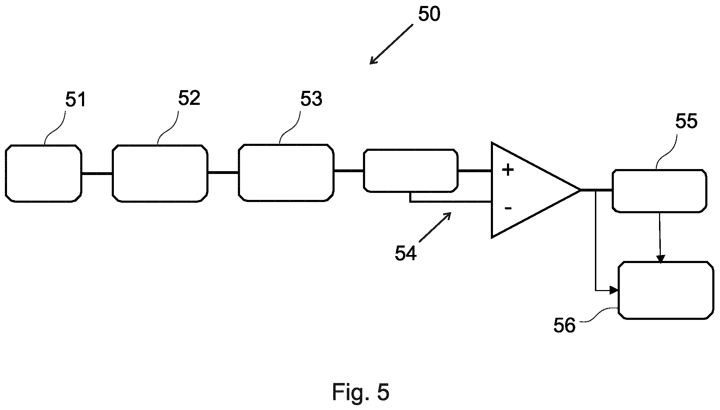

Figure 5 shows one embodiment of the WUR implemented as an assembly of the separate components 50. Immediately in front of the receiving antenna (not shown), the impedance matching network 51 may be located. The next stage is a low-noise amplifier (LNA) 52 followed by the envelope detector 53, a rectifier used to extract the modulating signal from the UWB radio message. The rectified signal is further guided to a comparator 54 and then processed by an interrupt generator 55 that, if certain conditions are met (e.g. a preamble is detected) generates a signal that awakes the main microcontroller unit (MCU). A low power addressing management unit 56 may complement this circuit in order to generate the wake-up signal only if the received address matches the own network address.

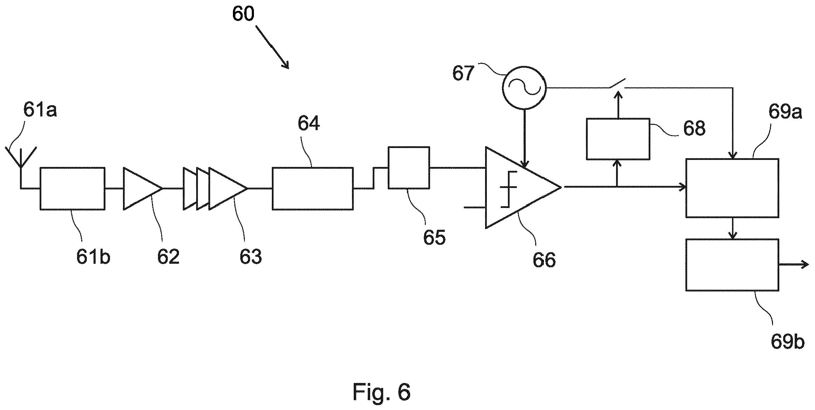

In another embodiment, WUR 60 is implemented in more advanced way in the form of an integrated circuit which main components are illustrated in Figure 6. In this example, the antenna 61a is connected to low noise amplifier (LNA) 62 by a matching network 61b which can be built of discrete components outside the IC, partially or fully integrated. The LNA 62 is followed by RF gain stages 63 that may be programmable. The RF-signal may be downconverted to base-band with a non-linearity 64 represented by an even function (f(x) = f(-x)), such as e.g. x² or abs(x) which may be realized as self-multiplier/mixer or by using the non-linear transconductance of a transistor. At base-band, signal sampling 66 by a comparator is prepared by filtering the received signal with a band-pass filter 65 that removes the signal contents at DC and limits the receiver bandwidth relative to the modulation rate. The comparator 66 may have a (programmable) detection threshold V_{det} and is run from the low frequency clock 67, e.g. at 32kHz. An activity detector 68 which may detect a time interval of continuous, (modulated) RF-signal, enables further signal processing 69a and 69b. The symbol detector 69a finds the boundaries between single symbols and passes the latter to 69b. The (programmable) data sequence detector 69b finds the start of the message data and detects one or multiple data sequences that are then forwarded to the transceiver as corresponding WU messages upon match.

The described systems and methods may be used, for example, for wearable, mobile or fixed devices to improve the communication energy efficiency and might advantageously improve the latency in the communication system such as UWB when it is necessary.

A significant advantage of the presented system and method is that it does not need any modification on the expensive, and often certified, autonomous devices, which need just any standard UWB transceiver and can be integrated in future UWB transceivers as a crucial energy efficient feature for the receiver path of the transceiver.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. A wireless communication system (10) comprising:
a first transceiver (11) configured to send and to receive wireless signals (14,15);
a second transceiver (13) configured to exchange the signals (15) with the first transceiver (11);
a wake-up receiver (12) configured to receive the signals (14) from the first transceiver(11) and to communicate with the second transceiver (13),
**characterized in that** the wake-up receiver (12) is configured to wake up the second transceiver (13) based on content of the signal (14) sent by the first transceiver (11) .

2. The wireless communication system (10) of claim 1, wherein the first transceiver (11), the second transceiver (13) and the wake-up receiver (12) are designed and configured to operate using ultra-wide band technology.

3. The wireless communication system (10) of claim 1 or claim 2, wherein the signals (15) exchanged between the first transceivers (11) and the second transceiver (13) are sent using a carrier frequency of 3.996 GHz and a bandwidth of 500 MHz.

4. The wireless communication system (10) of any of the preceding claims, wherein the first transceiver (11) is part of a first sensor node and the second transceiver is part of a second sensor node (23).

5. The wireless communication system (10) of any of the preceding claims, wherein the second transceiver (13) and the wake-up receiver (12) share a common antenna (25).

6. The wireless communication system of any of the preceding claims, wherein the first transceiver (11) is configured to modulate the signals (14) using on-off keying modulation to send signals (14) to the wake-up receiver (12) .

7. The wireless communication system of claim 6,
wherein a modulation frequency is lower than 16MHz.

8. The wireless communication system of claim 7,
wherein the modulation frequency is 1 kHz.

9. A method for operating a wireless communication system (10) of any of claims 1 to 8, the method comprising the steps:
transmitting a first signal (14) from the a transceiver (11) to a wake-up receiver (12);
analysing the content of the first signal (14) by the wake up receiver (12);
making decision to wake up the second transceiver (15) based on a content of the first signal (14).

10. The method for operating a wireless communication system of claim 9, wherein analysing the content of the first signal (14) by the wake- up receiver (12) comprises analysis of a preamble of the first signal (14) .

11. The method for operating a wireless communication system (10) of claim 9 or claim 10, wherein the first signal is sent (14) using ultra-wide band technology.

12. The method for operating a wireless communication system (10) any of claims 9 to 11, wherein the first signal (14) is modulated using on-off keying modulation.

13. The method for operating a wireless communication system (10) any of claims 9 to 12, further comprising a step of transmitting the second signal (15) from the second transceiver (13) to the first transceiver (11) .

14. The method for operating a wireless communication system (10) any of claims 9 to 13, wherein modulation frequency of the second signal (15) is higher than modulation frequency of the first signal (14).

15. A computer readable medium including executable instructions which, when executed in a processing system, causes the processing system to perform the steps of a method according to any one of claims 9 to 14.
